# EUROPEAN PATENT APPLICATION

(11) **EP 4 831 929 A1**
(43) Date of publication of application: **28.10.2026**
(21) Application number: 23961912.5
(22) Date of filing: 21.12.2023
(51) Int. Cl.: G06T 17/05

(54) **STATIC-ELEMENT LABELING METHOD AND APPARATUS, AND ELECTRONIC DEVICE AND STORAGE MEDIUM**

(71) Applicant: Yinwang Intelligent Technologies Co., Ltd., Shenzhen, Guangdong 518110 (CN)
(72) Inventor: FU, Jinbin, Shenzhen, Guangdong 518129 (CN); ZHANG, Liyao, Shenzhen, Guangdong 518129 (CN); LI, Li, Shenzhen, Guangdong 518129 (CN); FENG, Bailan, Shenzhen, Guangdong 518129 (CN); ZHANG, Yunchao, Shenzhen, Guangdong 518129 (CN)
(74) Representative: MERH-IP Matias Erny Reichl Hoffmann Patentanwälte PartG mbB
(86) International application number: PCT/CN2023/140726
(87) International publication number: WO 2025/129577

(57) **Abstract**

Embodiments of this application provide a static-element labeling method and apparatus, an electronic device, and a storage medium, to resolve a conventional-technology problem of a complex procedure and low accuracy of a road surface reconstruction method. Based on three-dimensional point cloud data that is collected from a target area by a collection device, an accurate pose of the collection device during collection of the three-dimensional point cloud data and image data is determined. A static-element labeling result that is labeled with road geometry of the target area and a specific position and a specific type of each static element is obtained based on the pose and the image data collected by the collection device. Alignment of image data collected in different times is implemented by reusing the pose obtained based on the three-dimensional point cloud data, thereby reducing complexity of aligning the image data collected in different times and improving efficiency of labeling a static element. In addition, a pose result is more accurate by obtaining the pose based on the three-dimensional point cloud data, so that an alignment result is more accurate, thereby improving accuracy of a labeled static element.

## Description

### TECHNICAL FIELD

This application relates to the data processing field, and relates to a static-element labeling method and apparatus, an electronic device, and a storage medium.

### BACKGROUND

The autonomous driving technology usually requires the assistance of visual information. In an autonomous driving process, a vehicle needs to identify a static element at a road surface by using a perception algorithm based on a video shot by a camera on the vehicle, to implement autonomous driving decision making based on the identified static element. The static element is a lane line, a sign, a zebra crossing, and the like on a road. For a conventional autonomous driving perception algorithm, images of an image perspective view (perspective view, PV) are usually used. It is usually difficult to determine a distance between objects based on a PV image. In addition, for a large target in a short distance in a plurality of images, the large target usually cannot be effectively identified. Therefore, visual perception in a bird's eye view (bird's eye view, BEV) gradually becomes a mainstream visual perception framework of next-generation autonomous driving.

In the conventional technologies, a static element at a road surface is usually identified by using an artificial intelligence model. In order that a vehicle can identify the static element by using the artificial intelligence model, the artificial intelligence model needs to be first trained based on training data labeled with the static element.

Currently, a mainstream method for obtaining training data labeled with a static element is as follows: A collection vehicle captures image data of a road surface, and three-dimensional road surface reconstruction is implemented based on the collected image data, to obtain high-definition three-dimensional space information with a semantic category for the road surface and obtain a static-element labeling result based on the three-dimensional space information with the semantic category. The semantic category indicates what a static element at the road surface is. The road surface reconstruction method in the conventional technologies still has a problem of a complex procedure and low accuracy.

### SUMMARY

Embodiments of this application provide a static-element labeling method and apparatus, an electronic device, and a storage medium, to resolve a conventional-technology problem of a complex procedure and low accuracy of a road surface reconstruction method.

According to a first aspect of embodiments of this application, a three-dimensional modeling static-element labeling method is provided. Based on three-dimensional point cloud data that is collected from a target area by a collection device, a pose of the collection device during collection of the three-dimensional point cloud data and image data is determined. A static-element labeling result that is labeled with road geometry of the target area and a specific position and a specific type of each static element is obtained based on the pose and the image data collected by the collection device.

In this application, the pose of the collection device during collection of the three-dimensional point cloud data of the target area is determined based on the collected three-dimensional point cloud data, and the image data that is collected from the target area by the collection device for a plurality of times is aligned based on the pose, so that a geometric shape of a road surface and each static element at the road surface are determined based on the aligned image data. The image data collected for a plurality of times is aligned based on the pose obtained based on the three-dimensional point cloud data. Compared with the conventional technologies in which the image data collected for a plurality of times is aligned based on only the image data, the method in this application reduces complexity of aligning the image data collected for a plurality of times, and improves efficiency of labeling a static element. In addition, a pose result is more accurate based on the three-dimensional point cloud data, so that an alignment result is more accurate, thereby improving accuracy of a labeled static element.

In an optional implementation, a density of the three-dimensional point cloud data is less than a preset threshold. When the density of the three-dimensional point cloud data is less than the preset threshold, in the solution of this application, the three-dimensional point cloud data with a low density can still be used for pose alignment, and accuracy and efficiency of pose alignment can still be ensured. It can be learned that, in this application, when the density of the three-dimensional point cloud data is less than the preset threshold, in this application, a sensor with low costs may be used to collect the three-dimensional point cloud data, thereby resolving a problem of high costs in the conventional technologies.

In an optional implementation, in this application, first three-dimensional space information that is of the target area and that includes semantic category data is generated based on the three-dimensional point cloud data. A process of generating the static-element labeling result includes: generating, based on the pose, the image data, and the three-dimensional point cloud data, second three-dimensional space information that is of the target area and that includes semantic category data; and fusing the first three-dimensional space information and the second three-dimensional space information to obtain target three-dimensional space information that is used for generating the static-element labeling result. In this way, advantages of multi-source data are fully utilized, so that the generated target three-dimensional space information is more accurate.

In an optional implementation, a process of generating the static-element labeling result includes: generating, based on the pose, the image data, and the three-dimensional point cloud data, second three-dimensional space information that is of the target area and that is used for generating the static-element labeling result.

In an optional implementation, the image data may be further preprocessed to obtain a semantic identification result that indicates a type of a static element included in the image data. The semantic identification result may be used to assist generation of three-dimensional space information in a subsequent step.

In an optional implementation, a process of generating the second three-dimensional space information includes: dividing the target area into a plurality of sub-areas; generating three-dimensional space information of the target area based on a three-dimensional modeling model of each of the plurality of sub-areas; and using the three-dimensional space information of the target area as the second three-dimensional space information. The three-dimensional modeling model uses a first coordinate value and a second coordinate value of a grid point included in the sub-area as input, and uses a third coordinate value and semantic category data of the grid point as output. The output of the three-dimensional modeling model is supervised based on the three-dimensional point cloud data and the semantic identification result of the image data, to train the three-dimensional modeling model. The semantic identification result indicates a type of a static element included in the image data. Three-dimensional reconstruction is implemented by using an artificial intelligence model, to improve efficiency and quality of three-dimensional reconstruction. In this way, when the artificial intelligence model is limited and a reconstruction area range is large, accuracy of the generated second three-dimensional space information can be improved in a partition reconstruction manner.

In an optional implementation, the method further includes: determining, based on the pose, a plurality of paths of collecting data by the collection device; for each of the plurality of sub-areas, using an area in a preset range of each of the plurality of paths as a reconstruction area corresponding to the sub-area; and training the three-dimensional modeling model of each of the plurality of sub-areas based on the reconstruction area corresponding to the sub-area. In this way, reliability of training data can be ensured, and accuracy of three-dimensional space information can be improved.

In an optional implementation, when the three-dimensional modeling model of the sub-area is trained, the three-dimensional modeling model is iteratively trained based on a plurality of iteration areas selected from the reconstruction area. In this way, in each iteration process, data of only one iteration area needs to be loaded, and all data of the reconstruction area/sub-area does not need to be loaded, thereby ensuring training efficiency.

In an optional implementation, a process of generating the first three-dimensional space information of the target area includes: generating the first three-dimensional space information based on the three-dimensional point cloud data and the semantic identification result of the image data. The first three-dimensional space information may carry the accurate semantic category data based on the semantic identification result of the image data.

In an optional implementation, a process of fusing the first three-dimensional space information and the second three-dimensional space information to generate the target three-dimensional space information includes: performing matching and alignment on the first three-dimensional space information and the second three-dimensional space information, and superposing the first three-dimensional space information and the second three-dimensional space information that are aligned, to obtain the target three-dimensional space information. The first three-dimensional space information and the second three-dimensional space information are fused in a manner of first performing matching and alignment and then performing superposition, so that a fusion result, that is, the target three-dimensional space information, can be more accurate.

In an optional implementation, a process of performing matching and alignment on the first three-dimensional space information and the second three-dimensional space information includes: converting the first three-dimensional space information and the second three-dimensional space information respectively into bird's eye view images; and performing matching and alignment on the bird's eye view images respectively corresponding to the first three-dimensional space information and the second three-dimensional space information. Compared with a manner of matching three-dimensional space information, converting the three-dimensional space information into bird's eye view images, and then performing alignment on a bird's eye view image set, this manner has higher matching and alignment efficiency. In addition, an offset between the first three-dimensional space information and the second three-dimensional space information is mainly an offset in a horizontal direction. In this way, matching can be completed more quickly while matching accuracy is ensured, and efficiency of generating the target three-dimensional space information can be improved.

In an optional implementation, training data of the target area may be further generated based on the static-element labeling result of the target area. The training data is used for training an artificial intelligence model for identifying a static element at a road surface. The method can quickly obtain accurate training data, thereby reducing costs of obtaining the training data.

In an optional implementation, a high-definition map of the target area may be further generated based on the static-element labeling result of the target area. The target area includes a road surface area. The high-definition map is obtained by using the foregoing method, to reduce costs of obtaining the high-definition map and improve a speed of obtaining the high-definition map.

According to a second aspect of embodiments of this application, an electronic device is provided, including a memory and a processor. The memory is configured to store a computer program, and the processor is configured to execute the computer program, to implement the method according to the first aspect or any implementation of the first aspect of embodiments of this application.

According to a third aspect of embodiments of this application, a computer-readable storage medium is provided. The computer-readable storage medium stores a computer program. When the computer program is executed by at least one processor, a computer is enabled to implement the method according to the first aspect or any implementation of the first aspect of embodiments of this application.

According to a fourth aspect of embodiments of this application, a static-element labeling apparatus is provided, including: a determining module, configured to determine, based on three-dimensional point cloud data that is collected from a target area by a collection device for a plurality of times, a pose of the collection device during collection of each frame of three-dimensional point cloud data in the three-dimensional point cloud data; and a generating module, configured to generate a static-element labeling result of the target area based on at least the pose and image data that is collected from the target area by the collection device for a plurality of times, where the static-element labeling result indicates road geometry of the target area and a position and a type of a static element.

It should be understood that technical features of the technical solutions provided in the second aspect, the third aspect, and the fourth aspect may all correspond to the method provided in the first aspect and the optional implementations of the first aspect. Therefore, beneficial effects that can be achieved are similar, and details are not described herein again.

### BRIEF DESCRIPTION OF DRAWINGS

FIG. 1 is a simplified diagram of a system architecture according to an embodiment of this application;
FIG. 2 is a simplified diagram of a collection device according to an embodiment of this application;
FIG. 3 is a simplified diagram of a server according to an embodiment of this application;
FIG. 4 is a flowchart of a static-element labeling method according to an embodiment of this application;
FIG. 5 is a flowchart of a training data generation method according to an embodiment of this application;
FIG. 6 is a flowchart of a static-element labeling method according to an embodiment of this application;
FIG. 7 is a diagram of projection according to an embodiment of this application;
FIG. 8 is a diagram of fusing first three-dimensional space information and second three-dimensional space information according to an embodiment of this application;
FIG. 9 is a flowchart of a three-dimensional space information generation method according to an embodiment of this application;
FIG. 10 is a diagram of a reconstruction area according to an embodiment of this application;
FIG. 11 is a diagram of a model training method according to an embodiment of this application; and
FIG. 12 is a block diagram of a static-element labeling apparatus according to an embodiment of this application.

### DESCRIPTION OF EMBODIMENTS

In an autonomous driving technology, a vehicle needs to automatically determine a route, process an accident, and the like. To implement these functions, the vehicle needs assistance of visual information. The vehicle needs to identify a static element at a road surface by using a perception algorithm based on an image or a video shot by a camera on the vehicle. For example, the vehicle needs to identify a lane line and a sign on the road surface, to ensure that the vehicle can travel on an appropriate lane during autonomous driving decision making.

In a conventional autonomous driving technology, an image or a video identified by using the perception algorithm is usually a PV image directly shot by the camera, and the PV image has a size-distance scaling characteristic. However, the PV image is a two-dimensional image. Therefore, it is difficult to determine a distance between objects. In addition, for a lane line, a coverage area of the lane line is large. Generally, a perception result of a single image cannot include all required perception information. Lane lines on different images and lane lines identified on the PV image usually cannot be used in another processing process.

To resolve the foregoing problem of the PV image, in the conventional technologies, a BEV is gradually used for visual perception. In the conventional technologies, an artificial intelligence model is usually used. A PV image is input, and a recognition result of a static element at a road surface in a BEV centered on the vehicle is output. To train the artificial intelligence model, supervised training needs to be performed. To implement supervised training, a ground truth (ground truth, GT) needs to be obtained, to supervise model training based on the ground truth. Usually, a static-element labeling result of the road surface in the BEV can be used as the GT to supervise training of the foregoing model. Training data generated below is the GT.

A mainstream manner in the conventional technologies is to obtain high-definition road-surface geometry and a high-definition semantic category in a three-dimensional road surface reconstruction manner, to implement automatic labeling of a static element at a road surface in a BEV. Three-dimensional reconstruction is a method for restoring three-dimensional space information of a scene based on perception information such as a laser and vision. In addition, to complete data labeling, three-dimensional reconstruction is also a semantic three-dimensional reconstruction method. To be specific, based on three-dimensional reconstruction, a semantic category is assigned to each part in the scene. For example, in semantic three-dimensional reconstruction, each part in the scene may be marked as a lane line, a sign, or a common road surface.

Three-dimensional road surface reconstruction is usually completed based on data collected by a collection device on a road surface. A mainstream method in the conventional technologies is to complete large-range three-dimensional road surface reconstruction by collecting multi-trip data. Compared with collecting only single-trip data, collecting multi-trip data can resolve the following problem: Entire three-dimensional road surface reconstruction cannot be completed based on the single-trip data. For example, for a crossroad, three-dimensional road surface reconstruction may be performed for only the crossroad part based on only the single-trip data, and entire three-dimensional reconstruction cannot be performed for the entire road surface. However, for the multi-trip data, different collection devices or a same device is used to pass through a same road area for a plurality of times, for example, a crossroad. The collection device turns left at an intersection in one trip of data collection, turns right at the intersection in one trip of data collection, and goes straight at the intersection in one trip of data collection. Each of the plurality of trips covers a same intersection area, but motion trajectories in different trips are not completely the same. This can facilitate large-range three-dimensional reconstruction. In addition, a result of three-dimensional reconstruction completed based on the multi-trip data may be stored. If a collection device further collects new data on the basis of a result corresponding to the reconstruction result, a result of the new collection may be directly labeled based on the existing multi-trip reconstruction result.

It can be learned that a mainstream manner in the conventional technologies is completing three-dimensional road surface reconstruction based on the multi-trip data, and implementing automatic labeling based on three-dimensional road surface reconstruction data, to automatically provide training data for the artificial intelligence model used to identify a static element at a road surface in a BEV.

The following describes a three-dimensional road surface reconstruction method in the conventional technologies. This method completes three-dimensional reconstruction based on only visual information. A camera of a collection device obtains multi-trip road surface image data. Three-dimensional road surface reconstruction is performed based on each piece of single-trip road surface image data, to obtain three-dimensional space information of a road surface. Then, position alignment is performed, based on a pose that is of the collection device and that is determined based on the road surface image data, on the three-dimensional space information corresponding to the plurality of single trips, to obtain large-range three-dimensional space information of the road surface. The three-dimensional space information may also be considered as a three-dimensional model. After the three-dimensional space information of the road surface is obtained, vectorization processing may be further performed to obtain a final required vectorized static-element labeling result of the road surface.

The method has the following problem: Because multi-trip image or video data cannot be accurately aligned based on only visual information, in the method, three-dimensional road surface reconstruction is first performed based on single-trip image or video data, and then alignment and fusion are performed based on three-dimensional space information corresponding to the plurality of single trips. However, in this manner, a procedure of the method for aligning the three-dimensional space information corresponding to the plurality of single trips is complex. In addition, if three-dimensional road surface reconstruction is performed based on only the visual data, reliability of an obtained result is not high. Correspondingly, because a two-phase method is used in the foregoing process, an error generated in a single-trip reconstruction process affects subsequent multi-trip alignment, which further affects final reconstruction quality.

It can be learned that the method shown in the conventional technologies still has a problem of a complex three-dimensional road surface reconstruction procedure and low accuracy.

In the foregoing solution in the conventional technologies, because a procedure of the alignment process is complex, implementation efficiency of the solution is low. To resolve the foregoing problem, in this application, alignment of poses of the collection device during collection of three-dimensional point cloud data is implemented based on the three-dimensional point cloud data collected by the collection device, so that a subsequent three-dimensional reconstruction process of image data can be implemented based on the aligned poses. This alignment manner also makes an alignment result more accurate. An error of the alignment result does not affect following reconstruction work, thereby resolving a problem in a reconstruction-before-alignment solution in the conventional technologies: An error caused by reconstruction affects alignment.

This application provides a static-element labeling method. Based on three-dimensional point cloud data that is collected from a target area by a collection device, a pose of the collection device during collection of the three-dimensional point cloud data and image data is determined. A static-element labeling result that is labeled with road geometry of the target area and a specific position and a specific type of each static element is obtained based on the pose and the image data collected by the collection device.

In this application, the pose of the collection device during collection of the three-dimensional point cloud data of the target area is determined based on the collected three-dimensional point cloud data, and the image data that is collected from the target area by the collection device for a plurality of times is aligned based on the pose, so that a geometric shape of a road surface and each static element at the road surface are determined based on the aligned image data. The image data collected for a plurality of times is aligned based on the pose obtained based on the three-dimensional point cloud data. Compared with the conventional technologies in which the image data collected for a plurality of times is aligned based on only the image data, the method in this application reduces complexity of aligning the image data collected for a plurality of times, and improves efficiency of labeling a static element. In addition, a pose result is more accurate based on the three-dimensional point cloud data, so that an alignment result is more accurate, thereby improving accuracy of a labeled static element.

The following describes implementations of embodiments of this application in detail with reference to the accompanying drawings.

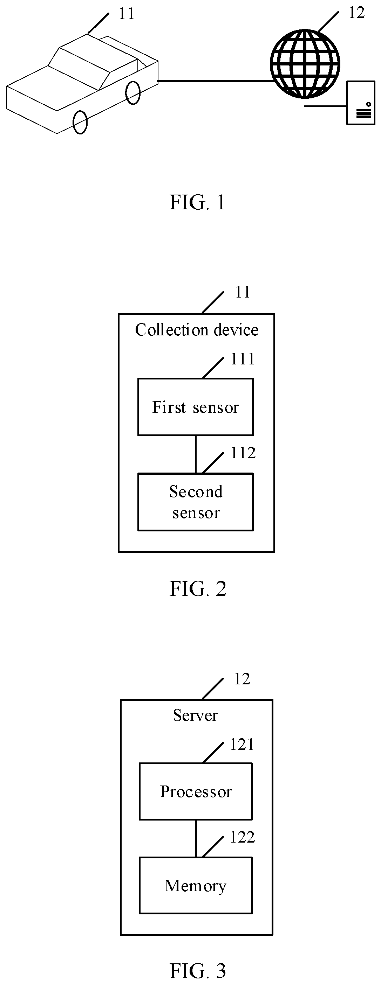

FIG. 1 is a simplified diagram of a system architecture to which an embodiment of this application may be applied. As shown in FIG. 1, the system architecture may include at least one collection device 11 and a server 12.

The collection device 11 is also a movable device configured to collect three-dimensional point cloud data and image data of a target area. The collection device 11 may be a vehicle, a robot, an aircraft, or the like. A specific form of the collection device 11 is not limited in this application. When three-dimensional road surface reconstruction is performed on a road, as shown in FIG. 1, the collection device 11 may be a collection vehicle.

FIG. 2 is a simplified diagram of a collection device according to an embodiment of this application. As shown in FIG. 2, the collection device 11 is equipped with a first sensor 111 and a second sensor 112. The first sensor 111 is configured to collect three-dimensional point cloud data, and the second sensor 112 is configured to capture image data.

The first sensor 111 may be any three-dimensional scanner configured to collect three-dimensional point cloud data, for example, may be a lidar, a millimeter-wave radar, a structured light sensor, or an ultrasonic sensor. When a density of the three-dimensional point cloud data in this application is less than a preset threshold, the first sensor 111 may be a sensor with low costs that collects three-dimensional point cloud data with a density less than the preset threshold, for example, a low-line-count lidar or a millimeter-wave radar.

The second sensor 112 may be a sensor configured to capture image or video data, for example, a camera.

The first sensor 111 and the second sensor 112 may be separately deployed on the collection device 11, or the two sensors may be integrated into a same sensor device. The sensor device may capture an image and three-dimensional point cloud data.

The collection device 11 may collect data while moving. For example, the collection device 11 may keep moving, and the first sensor 111 and the second sensor 112 on the collection device 11 may collect data at intervals of a preset time. In this way, in a moving process, the collection device 11 can obtain a plurality of frames of three-dimensional point cloud data, and a plurality of images or a plurality of video frames. The plurality of images or the plurality of video frames may be collectively considered as image data.

In addition, the collection device 11 may be further equipped with another sensor in addition to the first sensor 111 and the second sensor 112, for example, a third sensor configured to obtain a position and a posture of the collection device 11 in a travel process. The position and the posture collected by the third sensor are used as an initial pose. In a subsequent process, the initial pose may be corrected based on the three-dimensional point cloud data, to obtain an accurate pose of the collection device 11 during collection of each frame of three-dimensional point cloud data.

For example, the third sensor may include a sensor configured to collect position data and a sensor configured to collect posture data. The sensor configured to collect position data may be specifically a positioning sensor such as a BeiDou navigation satellite system (BeiDou navigation satellite system, BDS) or a global positioning system (global positioning system, GPS). The sensor configured to collect posture data may be a sensor such as an inertial measurement unit (inertial measurement unit, IMU).

In this application, multi-trip data is obtained. For example, data of a plurality of paths may be obtained through multi-trip data collection. To collect the data of the plurality of paths at low costs, one collection device 11 may separately collect data of the plurality of paths. To improve collection efficiency, a plurality of collection devices 11 may simultaneously collect data on a plurality of paths. A quantity of collection devices 11 may be the same as or less than a quantity of paths. The quantity of collection devices 11 is not specifically limited in this application.

The collection device 11 may further communicate with the server 12 in a wired or wireless manner to transmit data collected by the collection device 11 to the server 12, and the server 12 obtains a static-element labeling result.

Optionally, the system to which this embodiment of this application is applied may include only the collection device 11, and the collection device 11 performs data collection and labeling to obtain the static-element labeling result.

The server 12 is mainly configured to label a static element. FIG. 3 is a simplified diagram of a server according to an embodiment of this application. As shown in FIG. 3, the server 12 may include a processor 121 and a memory 122. The memory 122 is configured to store a computer program, and the processor 121 is configured to execute the computer program to implement the method in this application.

The processor 121 is a control center of the server 12. For example, the processor 121 may be any one of or a combination of a central processing unit (central processing unit, CPU), a graphics processing unit (graphics processing unit, GPU), a field-programmable gate array (field-programmable gate array, FPGA), and an application-specific integrated circuit (application-specific integrated circuit, ASIC).

The memory 122 may include a hard disk, a memory/video memory (which may also be referred to as a video random-access memory), a cache, and the like. The hard disk is a main storage medium of the server 12. The server may store, by using the hard disk, the three-dimensional point cloud data and the image data that are obtained from the collection device 11, and a computer program used to implement the method in this application. The cache is mainly used to improve read/write performance of the system.

It should be noted that the system architectures shown in FIG. 2 and FIG. 3 do not mean limitation on this application. The collection device 11 and the server 12 in this application may not only include the hardware shown in FIG. 2 and FIG. 3, but also include other hardware configured to implement running of the collection device 11 and the server 12. For example, when the collection device 11 is a collection vehicle, the collection device 11 may further include an engine and a processor. For example, the server 12 may further include a communication module used for communication.

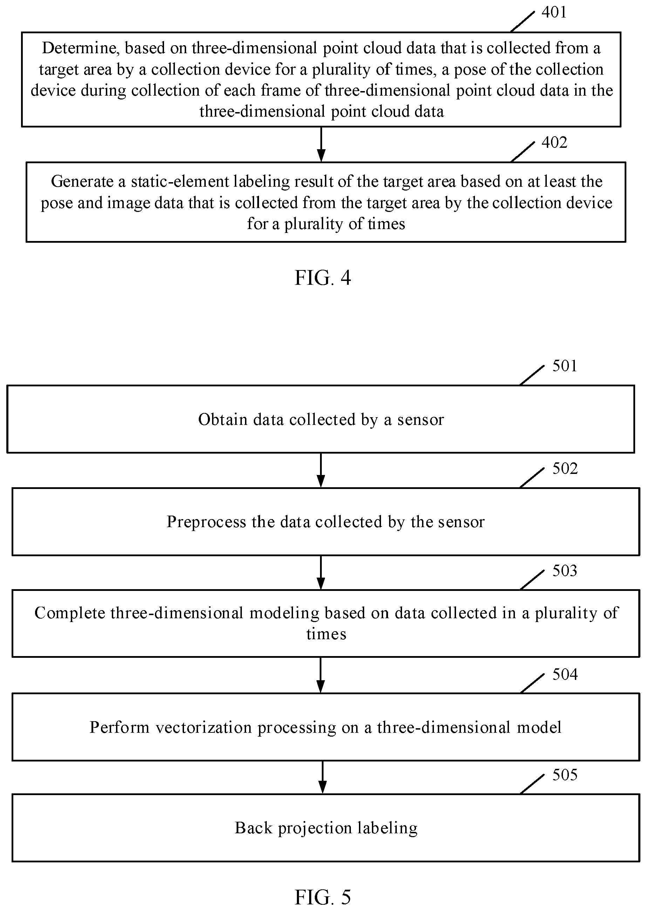

After the architecture of the system to which the method in this application is applied is briefly described, an example embodiment of this application is described below with reference to FIG. 4. As shown in FIG. 4, this application shows a static-element labeling method, including the following steps.

Step 401: Determine, based on three-dimensional point cloud data that is collected from a target area by a collection device for a plurality of times, a pose of the collection device during collection of each frame of three-dimensional point cloud data in the three-dimensional point cloud data.

According to the method in this application, the accurate pose is determined based on the three-dimensional point cloud data collected by the collection device, and then data alignment in subsequent steps is performed based on the accurate pose.

The method in this application may be performed by the collection device, or may be performed by an electronic device having a computing capability, for example, a server. An entity for performing a three-dimensional modeling method is not limited in this application.

The target area is an area for which a static-element labeling result needs to be generated. For a specific form of the target area, in some embodiments, the collection device may be a collection vehicle, and the target area may be a road area. When the target area is a road area, the static-element labeling method shown in this application is also used to label each static element on the road, for example, label a position of a lane line or a sign on a road. In addition, the target area may alternatively be any area for which static-element labeling needs to be performed. For example, the target area may be a village or a town. The static-element labeling method shown in this application is also used to label a static element of a village or a town, for example, label a type of a building in the village or the town.

For description of the collection device, refer to the foregoing description of the collection device 11 in FIG. 2. Details are not described herein again. The three-dimensional point cloud data (3D point cloud data) is a set of vectors in a group in a three-dimensional coordinate system. The three-dimensional point cloud data is recorded in a form of points. Each point includes three-dimensional coordinates, and may carry other information about an attribute of the point, for example, a color, a reflectivity, and intensity. In this application, three-dimensional space information mentioned below may also include a three-dimensional point cloud. The three-dimensional space information includes many points. Each point includes three-dimensional coordinates, and each point further carries semantic category data.

The three-dimensional point cloud data includes many frames of three-dimensional point cloud data. As described above, the three-dimensional point cloud data is actually collected at intervals of a preset periodicity, and the collection device has a corresponding pose when collecting each frame of three-dimensional point cloud data. The pose of the collection device indicates a position and a posture of the collection device. The position is used for determining the position of the collection device in a three-dimensional world during data collection. The posture indicates a pitch angle, a yaw angle, a roll angle, and the like of the collection device during data collection. In addition, for data indicating a posture, different collection devices may correspond to different data indicating postures. For example, for a collection vehicle, the posture may be represented by using a course (which may also be understood as a yaw angle).

For example, step 401 may be implemented by using a simultaneous localization and mapping (simultaneous localization and mapping, SLAM)-type method in the conventional technologies, to obtain aligned poses when the collection device collects frames of the three-dimensional point cloud data of the target area for a plurality of times. A specific implementation method is not described herein.

Step 402: Generate a static-element labeling result of the target area based on at least the pose and image data that is collected from the target area by the collection device for a plurality of times.

The static-element labeling result indicates road geometry of the target area and a position and a type of a static element. Both the three-dimensional point cloud data and the image data are obtained by the collection device by collecting the target area for a plurality of times.

After the pose of the collection device during collection of each frame of three-dimensional point cloud data is obtained in step 401, the pose may be used to implement alignment of the image data, thereby resolving a problem of a complex alignment process in the conventional technologies. In addition, an accurate pose does not cause an error to subsequent static-element labeling, thereby ensuring accuracy of the labeled static element.

As described above, in addition to the three-dimensional point cloud data, the collection device may further capture the image data. It is easy to understand that the three-dimensional point cloud data and the image data may be obtained by the collection device through simultaneous collection in parallel. In this case, the pose of the collection device during collection of each frame of three-dimensional point cloud data is a pose of the collection device during collection of each frame of image data. In addition, to make more accurate the determined pose of the collection device during collection of each frame of image data, a first sensor and a second sensor with a same sampling frequency may be selected, or a first sensor and a second sensor that satisfy that a sampling frequency of the first sensor is far greater than a sampling frequency of the second sensor are selected, to ensure that the pose of the collection device during collection of each frame of image data can be directly determined based on the pose of the collection device during collection of each frame of three-dimensional point cloud data. As described above, the first sensor is a sensor configured to collect the three-dimensional point cloud data, and the second sensor is a sensor configured to capture the image data.

In addition, both the image data and the three-dimensional point cloud data are multi-trip data. In other words, the two types of data are obtained by the collection device through a plurality of times of collection. For different times of collection, the collection device may select a plurality of different paths for collection, and the collection device may also select a similar or same path for collection. For a relationship between different paths, different paths may overlap, but any two paths are not completely the same. In this way, the collection device samples a plurality of paths, to obtain relatively complete data of the target area, thereby generating the three-dimensional space information of the target area.

It should be noted that the collection device performing collection for a plurality of times may mean that one collection device performs collection for a plurality of times, or may mean that a plurality of collection devices perform collection for a plurality of times, where each collection device performs collection at least once. A quantity of collection devices is not limited in this application.

Compared with static-element labeling of the road surface based on single-trip data, static-element labeling of the road surface based on multi-trip data can improve efficiency and make a labeling result more complete.

The static-element labeling result describes a visual feature of the target area. The road geometry is a geometric shape of a road, for example, is used to describe a shape of the road, whether there is a fork or a turning. The road geometry may be represented by using a bird's eye view image, or may be represented by using three-dimensional space information. The static element may be a static element on a road, for example, a zebra crossing, a lane line, or a left-turn sign on the road. The static-element labeling result indicates the road geometry and the position and the type of the static element, that is, describe a specific visual feature of the road surface in the target area.

For a specific form of the static-element labeling result, the static-element labeling result may be a bird's eye view image of the road surface, or may be the three-dimensional space information with the semantic category data. The three-dimensional space information is referred to as target three-dimensional space information hereinafter. The semantic category data is used to label a type of a static element corresponding to each point in the three-dimensional space information.

When the static-element labeling result is the bird's eye view image of the road surface, step 402 may be: aligning, based on the pose, the image data collected by the collection device, and then converting, based on intrinsic parameters and extrinsic parameters of the camera, the image data collected by the collection device into the bird's eye view image of the road surface.

The following uses a method for generating target three-dimensional space information as an example to describe the static-element labeling method in this application.

The target three-dimensional space information may also be understood as the three-dimensional point cloud data of the target area. Each point in the three-dimensional point cloud data carries semantic category data. The semantic category data indicates a semantic category of the point. From another perspective, the semantic category data may also indicate a type of a static element corresponding to a grid point in the three-dimensional space information. The grid point is a point in the three-dimensional space information. The static element is a static object in the three-dimensional space information. For example, in a road surface three-dimensional reconstruction scenario, semantic data of corresponding three-dimensional space information may indicate whether each point is a common road surface, a lane line, or a sign.

In addition, a "target" of the target three-dimensional space information is to distinguish other three-dimensional space information, and does not indicate limitation on a form of the three-dimensional space information.

For a specific implementation of step 402, step 402 may be implemented as step 603 and step 604 in the following embodiment. To be specific, first three-dimensional space information is first generated based on the three-dimensional point cloud data, second three-dimensional space information is generated based on the image data, and then the two pieces of three-dimensional space information are fused to generate the target three-dimensional space information.

In addition, the target three-dimensional space information may be alternatively directly generated based on the image data. To be specific, step 402 includes: generating second three-dimensional space information of the target area based on the pose, the image data, and the three-dimensional point cloud data, where the second three-dimensional space information is used for generating the static-element labeling result. For a specific generating manner, refer to the following description of step 603. The static-element labeling result is generated based on the second three-dimensional space information. A static-element labeling result in an image form may be generated based on the second three-dimensional space information, or the second three-dimensional space information may be used as a static-element labeling result.

In addition, in the foregoing two implementations of step 402, a manner of generating the second three-dimensional space information based on the image data may not be an implementation of step 603 below, and may use another implementation. For example, a manner similar to that in the conventional technologies may be used. To be specific, for each piece of single-trip data, three-dimensional space information corresponding to single-trip image data is first generated based on the single-trip image data, and then the pose determined in step 401 is reused to determine a relative relationship between a plurality of pieces of three-dimensional space information, to generate the target three-dimensional space information of the target area.

For another example, the image data collected on the plurality of paths may be first aligned based on the pose determined in step 401. To be specific, in a large coordinate system, a pose of the collection device during collection of each image is determined from the data collected by the collection device on the plurality of paths of the target area, and then the target three-dimensional space information of the target area is generated based on the aligned image data.

The foregoing example is merely an example of step 402, and does not constitute limitation on this application.

In addition, after the target three-dimensional space information is obtained in step 402, automatic labeling of training data may be performed based on the target three-dimensional space information. Compared with the conventional technologies in which three-dimensional road surface reconstruction is performed based on only visual information, the method shown in this application improves both accuracy and efficiency.

The target area in this application may be various areas. When the target area in this application is a road area, the three-dimensional space information obtained by using the method in this application may have many applications, for example, automatic labeling of training data and generation of a high-definition map. By using a specific embodiment, the following describes an application scenario of automatically labeling training data by using the three-dimensional modeling method in this application. In some examples, the target area may not only be a road area, and the three-dimensional modeling method in this application may also be separately performed. To be specific, only step 501 to step 503 in the following method are performed. The following example does not means limitation on this application. The following steps in FIG. 5 may be performed by the server 12 shown in FIG. 1, or may be performed by the collection device 11 shown in FIG. 1. An execution entity is not limited in this application.

As shown in FIG. 5, the method may specifically include the following steps.

Step 501: Obtain data collected by a sensor.

Specifically, as shown in FIG. 2, the collection device 11 may be equipped with many sensors, and may collect data of a road surface by using the sensors on the collection device 11.

In this embodiment, a first sensor may be a low-line-count lidar, a second sensor may be a camera, and a third sensor may include an IMU and a GPS. Laser three-dimensional point cloud (three-dimensional point cloud for short below) data may be collected by using the low-line-count lidar. Image data may be collected by using the camera. The image data may include many video frames. In addition, to determine a posture of the camera during obtaining of the image data, intrinsic parameters and extrinsic parameters of the camera may be further obtained. A position and a posture of the collection device during data collection may be obtained respectively by using the IMU and the GPS.

Step 502: Preprocess the data collected by the sensor.

The preprocessing means preprocessing the data collected by using the sensor in step 501. The preprocessing may mainly include: first, preprocessing three-dimensional point cloud data; second, performing semantic segmentation and pre-labeling on image data; and third, correcting the intrinsic parameters and the extrinsic parameters of the camera.

Preprocessing the three-dimensional point cloud data may mainly include: removing a dynamic target point cloud and a non-road-surface-area point cloud. For a specific removal manner, refer to a method in the conventional technologies. Details are not described in this application. In this application, a static-element labeling result of a road surface is mainly generated, and the three-dimensional point cloud data is preprocessed, to remove content to which attention does not need to be paid. This can improve accuracy of a pose determined based on the three-dimensional point cloud data in a subsequent step, and also improve processing efficiency of the subsequent step.

Semantic segmentation and pre-labeling are performed on the image data. To be specific, semantic categories of parts of the road surface in a PV image shot by the camera are labeled. For example, which part of the image is a sign or which part is a common road surface may be labeled. For a semantic segmentation and prelabeling method, refer to a method in the conventional technologies. Details are not described in this application. A semantic identification result of the image data may be obtained by performing semantic segmentation and prelabeling on the image data. For a function of the semantic identification result of the image data, refer to the following description.

In other words, the static-element labeling method in this application further includes: preprocessing the image data to obtain the semantic identification result of the image data, where the semantic identification result indicates a type of a static element included in the image data.

The intrinsic parameters and the extrinsic parameters of the camera are corrected, so that a posture of the camera relative to the collection device can be more accurately determined. Therefore, a projection relationship between the image data captured by the camera and a three-dimensional world can be more accurately determined, so that semantic category data determined in a subsequent step can be more accurate.

Step 503: Complete three-dimensional modeling based on data collected in a plurality of times.

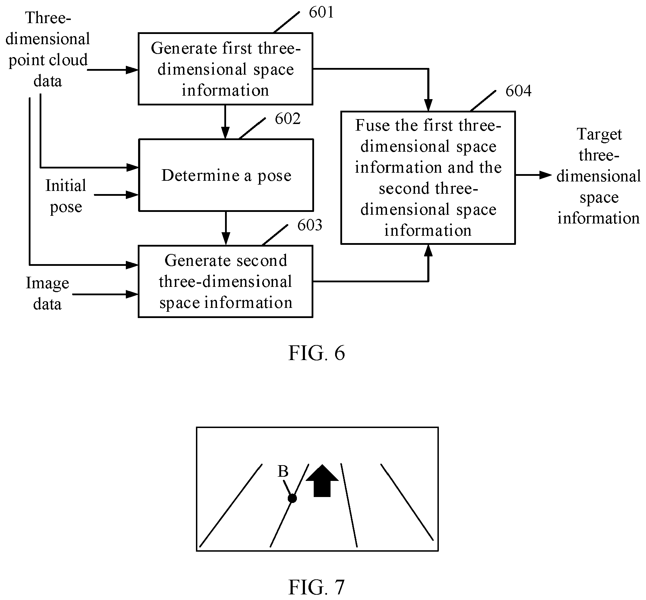

In other words, three-dimensional modeling is performed on the road surface based on a preprocessing result in step 502. For an implementation method of this step, refer to the foregoing description of FIG. 4, or refer to the following description of FIG. 6. Details are not described herein again. Three-dimensional space information of a target area may be obtained by performing three-dimensional modeling in step 503.

Step 504: Perform vectorization processing on the three-dimensional space information.

To be specific, vectorization processing is performed on the three-dimensional space information obtained in step 503, to obtain a vectorization labeling result of a road surface range covering the target area. In other words, each static element at the road surface is labeled by using a vector. A map in the conventional technologies is usually a vector map. Therefore, after the three-dimensional space information of the target area is obtained, to facilitate automatic labeling on the map in a subsequent step, the three-dimensional space information may be first converted into a vector map in step 504.

In addition, a processing result of step 504 may also be used as a high-definition map of the target area. In other words, when the target area is a road surface area, the high-definition map may be generated by performing step 501 to step 504.

In other words, in this application, the high-definition map of the target area is further generated based on the static-element labeling result, and the target area includes the road surface area.

Step 505: Perform back projection labeling.

To be specific, back projection labeling is performed on the vectorized high-definition map generated in step 504, and the vectorized high-definition map of the target area is back projected to single-trip data by relocating the single-trip data, to automatically label a static element of the single-trip data.

Therefore, in an application scenario of this application, the method may be used for labeling of training data. Because the training data needs to be finally obtained, and the training data is an artificial intelligence model used to train and identify a static element at a road surface, correspondingly, the vectorized high-definition map needs to be projected to the single-trip data, to generate training data labeled with the static element.

In other words, in this application, the training data of the target area is further generated based on the static-element labeling result. The training data is a bird's eye view image including semantic category data. The training data is used for training the artificial intelligence model for identifying the static element at the road surface.

For specific implementations of step 504 and step 505, refer to a method in the conventional technologies. Details are not described in this application.

After a main procedure of generating the training data is described, the following describes step 503 in detail. As shown in FIG. 6, in this embodiment, a three-dimensional modeling method includes the following steps.

Step 601: Generate first three-dimensional space information of a target area based on at least three-dimensional point cloud data.

The first three-dimensional space information includes semantic category data.

Step 602: Determine, based on three-dimensional point cloud data that is collected from a target area by a collection device, a pose of the collection device during collection of each frame of three-dimensional point cloud data in the three-dimensional point cloud data.

Step 603: Generate second three-dimensional space information of the target area based on the pose, image data, and the three-dimensional point cloud data.

The second three-dimensional space information includes semantic category data.

Step 604: Fuse the first three-dimensional space information and the second three-dimensional space information to generate target three-dimensional space information.

The target three-dimensional space information is used for generating a static-element labeling result. For example, the target three-dimensional space information may be converted into the static-element labeling result in an image form, or the target three-dimensional space information with the semantic category data may be directly used as the static-element labeling result.

Step 603 and step 604 may jointly form step 402 shown in FIG. 4.

In the foregoing method, the two pieces of three-dimensional space information of the target area are respectively generated based on the three-dimensional point cloud data and the image data, the two pieces of three-dimensional space information are fused, and the three-dimensional space information is used as the finally output target three-dimensional space information of the target area. In this way, advantages of multi-source data are fully utilized, so that the generated target three-dimensional space information is more accurate.

In addition, in an optional implementation, a density of the three-dimensional point cloud data may be less than a preset threshold. The preset threshold is used for distinguishing between sparse three-dimensional point cloud data and dense three-dimensional point cloud data. Three-dimensional point cloud data whose density is less than the preset threshold is sparse three-dimensional point cloud data. In an optional embodiment, a value of the preset threshold may be determined based on densities of three-dimensional point clouds that can be collected by a high-line-count lidar and a low-line-count lidar. For details about the sensor for collecting three-dimensional point cloud data whose density is less than the preset threshold, refer to the foregoing description of the first sensor 111. Details are not described herein again.

A problem of another solution in the conventional technologies can be resolved by selecting three-dimensional point cloud data whose density is less than the preset threshold. Specifically, in the conventional technologies, there is another three-dimensional road surface reconstruction solution. To be specific, three-dimensional reconstruction is performed by using a conventional high-definition map construction solution. It is easy to understand that a conventional high-definition map construction method is actually also used for generating three-dimensional space information of a road surface, and therefore, the method may be reused in a process of labeling a static element at a road surface. Specifically, in this method, the collection device is equipped with a high-line-count lidar and a precise positioning module, and three-dimensional space information is reconstructed based on data collected by the sensor.

The solution has the following problem: In this solution, the collection device needs to be equipped with the high-line-count lidar and the precise positioning module. The high-line-count lidar and the precise positioning module have relatively high costs. As a result, the solution cannot implement large-scale three-dimensional road surface reconstruction at low costs.

In the solution of this application, three-dimensional point cloud data collected by a lidar or another sensor is mainly used for pose alignment. It is easy to understand that the density of the three-dimensional point cloud data in this application may be large or small. When the density of the three-dimensional point cloud data is less than the preset threshold, in the solution of this application, the three-dimensional point cloud data with a low density can still be used for pose alignment, and accuracy and efficiency of pose alignment can still be ensured. It can be learned that, in this application, when the density of the three-dimensional point cloud data is less than the preset threshold, in this application, the sensor with low costs may be used to collect the three-dimensional point cloud data, thereby resolving a problem of high costs in the conventional technologies while alignment accuracy is ensured. In addition, the three-dimensional point cloud data is selected and used. Advantages of the three-dimensional point cloud data and the image data are integrated. An accurate pose of a vehicle is provided based on a characteristic of the three-dimensional point cloud data. Three-dimensional modeling is performed based on image data with dense semantics by reusing the pose, to obtain an accurate static-element labeling result.

In this way, the collection device may be equipped with a low-cost first sensor configured to collect three-dimensional point cloud data. For example, the first sensor may be a low-line-count lidar, and the collection device may be a production vehicle equipped with the low-line-count lidar. Pose alignment between data collected on a plurality of paths is implemented based on the sparse three-dimensional point cloud data collected by the first sensor. First three-dimensional space information is generated based on the sparse three-dimensional point cloud data. After the pose determined based on the three-dimensional point cloud data is obtained, the pose is reused to perform visual three-dimensional reconstruction, to generate second three-dimensional space information.

Correspondingly, in an optional implementation, a density of the first three-dimensional space information obtained based on the three-dimensional point cloud data whose density is less than the preset threshold may be less than a point cloud density of the second three-dimensional space information. In other words, the point cloud density of the second three-dimensional space information may be greater than a point cloud density of the first three-dimensional space information. In this embodiment of this application, the first three-dimensional space information is used for aligning the image data collected in a plurality of times, that is, may be used for determining a position relationship between the image data collected in a plurality of times. Therefore, the density of the first three-dimensional space information may be not high, and a sparse part of the first three-dimensional information is further supplemented by using the dense second three-dimensional space information in a subsequent step.

In this implementation, the precise three-dimensional modeling and the accurate pose are obtained based on the three-dimensional point cloud data, and alignment of the image data is implemented based on the pose. The image data provides the dense semantics. Missing details of the first three-dimensional space information obtained based on the sparse three-dimensional point cloud data are supplemented. The two pieces of three-dimensional space information are fused. The advantages of the three-dimensional point cloud data and the image data are fully utilized, thereby implementing high-efficiency and high-quality three-dimensional road surface reconstruction.

After the method in FIG. 6 is briefly described, the following describes specific implementations of the steps in FIG. 6.

The semantic category data of the first three-dimensional space information and that of the second three-dimensional space information are the same as the semantic category data of the target three-dimensional space information. In other words, the semantic category information is an attribute of three-dimensional space information, and indicates a semantic category of a point in the three-dimensional space information, that is, indicates a type of a static element corresponding to a grid point in the three-dimensional space information.

For specific implementations of step 601 and step 602, positioning and three-dimensional modeling may be performed based on an initial pose by using an SLAM-type method in the conventional technologies. Specifically, the position and the posture of the collection device during data collection are obtained by using a third sensor of the collection device. The position and the posture are referred to as the initial pose. In addition, the initial pose is corrected based on a relationship between frames of the three-dimensional point cloud data, to determine a pose of the collection device during collection of each frame of three-dimensional point cloud data. In addition, matching and alignment are performed on a plurality of frames of the three-dimensional point cloud data, to obtain the three-dimensional space information.

In addition, after the three-dimensional space information is obtained by using the SLAM-type method, the semantic category data further needs to be added to the three-dimensional space information, to generate the first three-dimensional space information.

Herein, a specific example is used to describe a method for adding the semantic category data. The example does not mean limitation on this application. Specifically, a semantic identification result of the image data may be determined; and the first three-dimensional space information may be generated based on the three-dimensional point cloud data and the semantic identification result of the image data.

In other words, a projection relationship between the image data and the three-dimensional space information/the three-dimensional point cloud data may be determined based on intrinsic parameters and extrinsic parameters of a camera, and a point in the three-dimensional space information may be projected to the image data. For example, a point A in the three-dimensional space information is projected to the image data as a point B in the image data. Semantic category data corresponding to the point B may be determined based on the semantic identification result of the image data. As shown in FIG. 7, the point B is a lane line. Therefore, the semantic category data corresponding to the point B is used as semantic category data of the point A. In other words, the semantic category data corresponding to the point A is considered as the lane line. In this way, the first three-dimensional space information including semantic category data of each point can be obtained.

For a specific implementation of step 604, the first three-dimensional space information and the second three-dimensional space information may be directly superposed. In addition, because a process of generating the second three-dimensional space information based on the image data depends on parameters such as the intrinsic parameters and the extrinsic parameters of the camera, if these parameters are inaccurate or an error occurs in a process of generating the second three-dimensional space information based on the image data, coordinates of the first three-dimensional space information and those of the second three-dimensional space information may not be completely aligned. Therefore, step 604 may be further first performing matching and alignment on the first three-dimensional space information and the second three-dimensional space information, and superposing the first three-dimensional space information and the second three-dimensional space information that are aligned.

In other words, step 604 may include: performing matching and alignment on the first three-dimensional space information and the second three-dimensional space information, and superposing, based on an alignment result, the first three-dimensional space information and the second three-dimensional space information, to obtain the target three-dimensional space information.

The first three-dimensional space information and the second three-dimensional space information are fused in a manner of first performing matching and then performing superposition, so that a fusion result, that is, the target three-dimensional space information, can be more accurate.

For a method for matching the first three-dimensional space information and the second three-dimensional space information, the following describes the matching method by using a specific example. It should be noted that the following example does not mean limitation on this application.

The first three-dimensional space information and the second three-dimensional space information may be first converted into bird's eye view images, and then the two images are matched and aligned, to determine an offset between the two images. In other words, the foregoing alignment process includes: converting the first three-dimensional space information and the second three-dimensional space information respectively into the bird's eye view images; and performing matching and alignment on the bird's eye view images respectively corresponding to the first three-dimensional space information and the second three-dimensional space information.

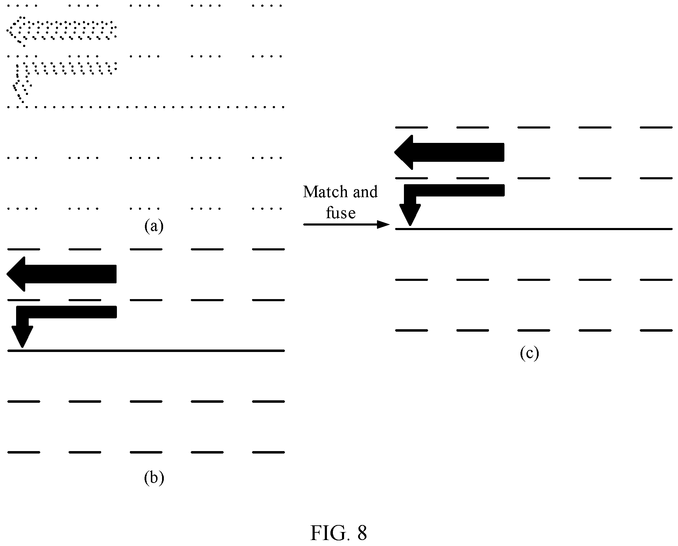

As shown in FIG. 8, the first three-dimensional space information may be converted into an image shown in (a) in FIG. 8, and the second three-dimensional space information may be converted into an image shown in (b) in FIG. 8. It may also be learned from FIG. 8 that the first three-dimensional space information is sparser than the second three-dimensional space information. Then, matching and superposing are performed on the first three-dimensional space information and the second three-dimensional space information, to obtain target three-dimensional space information shown in (c) in FIG. 8. It should be noted that, for ease of presentation, the target three-dimensional space information is also presented in a manner of a BEV image in FIG. 8.

Compared with a manner of matching three-dimensional space information, this manner has higher matching efficiency for two-dimensional images. In addition, the offset between the first three-dimensional space information and the second three-dimensional space information is mainly an offset in a horizontal direction. In this way, matching can be completed more quickly while matching accuracy is ensured, and efficiency of generating the target three-dimensional space information can be improved.

For a specific matching method, matching may be performed by using a central-mask (mask) template matching manner. Specifically, a template for removing a central image part may be selected and used. Central parts of the two images are removed according to the template. Matching is performed on remaining parts other than the central parts. An offset is determined. Then, the central parts of the two images are superposed based on the offset. Such a matching manner can ensure matching accuracy. In addition, the first three-dimensional space information and the second three-dimensional space information may be separately converted into a plurality of images, and matching may be separately performed on images of different positions. This can also improve matching accuracy.

In addition, in some cases, point clouds at different positions in the first three-dimensional space information and the second three-dimensional space information that are superposed may be different. For example, in the first three-dimensional space information, there is a point A whose coordinate values are (x, y, z1). Semantic category data corresponding to the point A is a common road surface. The second three-dimensional space information that is corrected based on the offset includes a point B of (x, y, z1). Semantic category data corresponding to the point B is a lane line. It can be learned that the point A and the point B have different heights and different semantic category data. When the foregoing problem exists, the point may be labeled. A specific height and a semantic category of the point are manually determined. Alternatively, a result of the point may be corrected in a filtering manner. A specific processing manner in the foregoing case is not limited in this application. It may be understood that in the method used in this application, accuracy is relatively high, and a probability of generating the foregoing error is relatively low. In other words, there are relatively few points on which the foregoing problem exists. Even if error correction is manually performed, efficiency of generating three-dimensional space information is not excessively reduced.

For a specific implementation of step 603, in addition to the foregoing example of step 402, the second three-dimensional space information may be further generated in the following manner. It should be noted that the following manner is merely an example, and does not constitute limitation on this application.

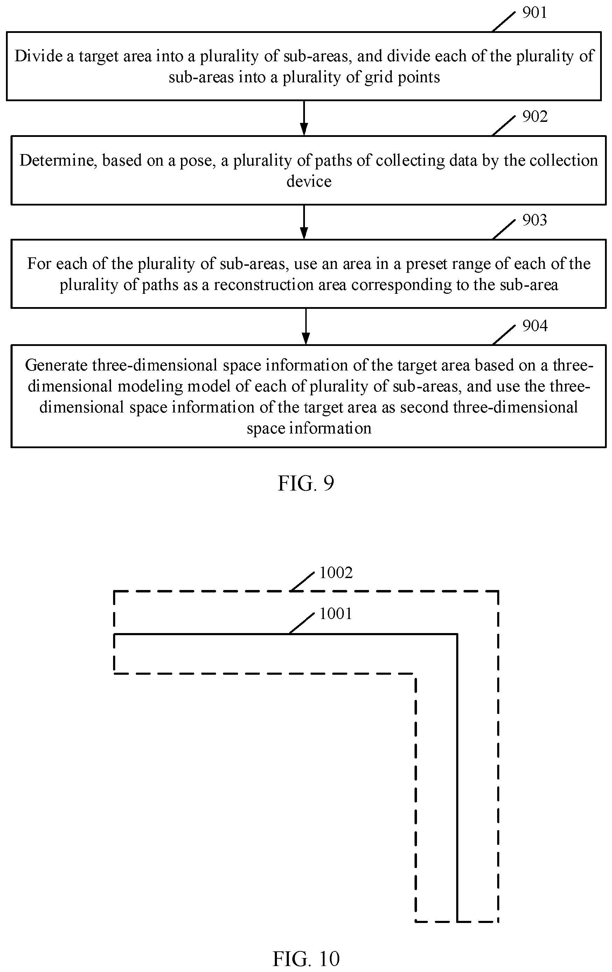

As shown in FIG. 9, a process of generating the second three-dimensional space information includes the following steps:
Step 901: Divide the target area into a plurality of sub-areas, and divide each of the plurality of sub-areas into a plurality of grid points.
Step 902: Determine, based on the pose, a plurality of paths of collecting data by the collection device.
Step 903: For each of the plurality of sub-areas, use an area in a preset range of each of the plurality of paths as a reconstruction area corresponding to the sub-area.
Step 904: Generate three-dimensional space information of the target area based on a three-dimensional modeling model of each of plurality of sub-areas, and use the three-dimensional space information of the target area as the second three-dimensional space information.

The three-dimensional modeling model uses a first coordinate value and a second coordinate value of a grid point included in the sub-area as input, and uses a third coordinate value and semantic category data of the grid point as output. The output of the three-dimensional modeling model is supervised based on the three-dimensional point cloud data and the semantic identification result of the image data, to train the three-dimensional modeling model. The semantic identification result indicates a type of a static element included in the image data. The three-dimensional modeling model of each of the plurality of sub-areas is trained based on the reconstruction area corresponding to the sub-area.

In other words, a sub-area covered by a three-dimensional modeling model is first determined. In the sub-area, alignment is performed on a plurality of paths based on the pose, and a relationship between the plurality of paths is determined. In addition, a modeling range with data trustworthiness is determined based on the plurality of paths, and a height and semantic category data are separately supervised in the modeling range based on the three-dimensional point cloud data and the semantic identification result of the image data, to train a three-dimensional modeling model that can output parameters of each point in three-dimensional space information. The three-dimensional modeling model also briefly describes a feature of a road surface of a sub-area. Different three-dimensional modeling models describe different road surface ranges. When the model converges, three-dimensional space information of a sub-area is generated by using the three-dimensional modeling model, and three-dimensional road surface reconstruction is completed based on the image data. When the model does not converge, step 904 is performed again. The three-dimensional space information of the target area may be obtained by combining three-dimensional space information of the plurality of sub-areas.

It is easy to understand that, although three-dimensional road surface reconstruction is not completed only based on the image data in the foregoing process, the image data plays a greater role in the reconstruction process in comparison with the three-dimensional point cloud data and the pose. Therefore, the process shown in FIG. 9 may be referred to as visual three-dimensional reconstruction.

After the foregoing process is briefly described, the following describes specific implementations of the steps shown in FIG. 9.

In step 901, dividing the target area into the plurality of sub-areas may be determining a size of one sub-area, and dividing the target area according to the size of the sub-area. Alternatively, in collected multi-trip data, for a plurality of intersections, an area in a specific range of each intersection may be selected as a sub-area. For example, a range of 400 meters * 400 meters around an intersection may be selected as a sub-area. Based on a determined pose, image data and three-dimensional point cloud data in the sub-area may be considered as training data of the sub-area.

After the sub-area is determined, grid division may be performed on the sub-area in a horizontal direction. For example, grid division may be performed according to a size of 1 centimeter * 1 centimeter, and each grid point is used as a point, in the second three-dimensional space information, whose height and semantic category data need to be determined.

In a subsequent step, training of the three-dimensional modeling model is performed based on each of the plurality of sub-areas, and the three-dimensional modeling model includes a three-dimensional modeling model obtained through training for each of the plurality of sub-areas. In other words, one three-dimensional modeling model is trained for each sub-area, and three-dimensional modeling models of different sub-areas may be different.

In step 901, division into a plurality of sub-areas needs to be performed because of limitation of a representation capability of an artificial intelligence model. The plurality of sub-areas are obtained through division, and the three-dimensional modeling model (that is, an artificial intelligence model) is trained for each sub-area, so that different three-dimensional modeling models are used to represent features of different positions in the reconstruction area. In this way, when the artificial intelligence model is limited and a reconstruction area range is large, accuracy of the generated second three-dimensional space information can still be improved.

Certainly, in some other embodiments, step 901 may be omitted. In other words, for the target area, a three-dimensional modeling model that can describe a height of the target area and a semantic category data feature is directly trained.

The plurality of paths in step 902 are a plurality of paths traveled by the collection device during collection of data in a plurality of times. The plurality of paths may be the same or may be different.

For step 902, the accurate pose of the collection device is determined in step 602. Therefore, the plurality of paths of collection performed by the collection device may be determined based on the accurate pose of the collection device. The paths determined in step 901 are used for determining the sub-area in the subsequent step.

For step 903, an area in a preset trajectory range is also used as a sub-area corresponding to the target area. It may be understood that the target area and the reconstruction area may be the same or different. The target area is an area in which collection can be performed by the collection device, while the reconstruction area is an area in which three-dimensional road surface reconstruction is performed.

For a specific implementation of step 903, for each path, an area in a circumscribed rectangle of a trajectory may be determined as a reconstruction area. For example, as shown in FIG. 10, a line 1001 is a trajectory, and a dashed-line box 1002 is a corresponding reconstruction area. Alternatively, a range of 20 meters * 20 meters around each position may be selected based on the pose data as a three-dimensional modeling area, and three-dimensional modeling areas corresponding to a plurality of points in a sub-area may be combined to form a reconstruction area.

In step 903, reconstruction-area division needs to be performed because an image of a position that is in images and that is far away from a trajectory of the collection device may be unreliable although a relatively wide area can be obtained through image shooting based on both the image data and the three-dimensional point cloud data. Therefore, reconstruction-area division needs to be performed to ensure accuracy of generated three-dimensional space information.

After the reconstruction area is determined in step 903, in a subsequent training process, training of the three-dimensional modeling model of each of the plurality of sub-areas is performed based on the reconstruction area corresponding to the sub-area.

In some other embodiments, step 903 may be not performed. For example, all data of the sub-area may be used as the training data in step 904.

After the generating process is described, the following describes the training process of the three-dimensional modeling model.

A specific training process may include: selecting a plurality of grid points from the sub-area, and cyclically performing the following steps until convergence: for each of the plurality of grid points, using a first coordinate value and a second coordinate value of the grid point as input, and obtaining a third coordinate value and semantic category data of the grid point by using the three-dimensional modeling model; determining a truth value of the third coordinate value of the grid point based on the three-dimensional point cloud data, and supervising the third coordinate value based on a first loss function and the truth value of the third coordinate value; and projecting the grid point into the image data based on the first coordinate value, the second coordinate value, and the third coordinate value of the grid point, determining a truth value of the semantic category data of the grid point based on the semantic identification result of the image data, and supervising the semantic category data of the grid point based on a second loss function and the truth value of the semantic category data.

In addition, in some cases, in consideration of a limited computing capability, for each reconstruction area, a plurality of iteration areas may be selected from each reconstruction area, and training is performed for a plurality of times based on the plurality of iteration areas. After iteration is performed for many times in each iteration area, another iteration area is reselected for training. In this way, in each iteration process, data of only one iteration area needs to be loaded, and all data of the entire reconstruction area/sub-area does not need to be loaded, thereby ensuring training efficiency.

In other words, for example, a plurality of iteration areas are selected from each reconstruction area. When training of a three-dimensional modeling model of a sub-area is performed, iterative training is performed on the three-dimensional modeling model based on the plurality of iteration areas selected from the reconstruction area.

It should be noted that, if there is an iteration area, selecting the plurality of grid points from the sub-area may be selecting many grid points from each iteration area for each iteration area. After the grid points selected from the iteration area are iterated for a plurality of times, grid points in another iteration area may be selected, and the foregoing training step is performed again.

Certainly, in some other embodiments, when a computing capability is relatively strong, the iteration areas may be not selected, and many grid points are directly selected from each sub-area/reconstruction area to train the three-dimensional modeling model.

In the foregoing method, many grid points are first selected, and two coordinate values of the grid point are used as input. The three-dimensional modeling model outputs, based on the input, a height value (that is, the third coordinate value) and the semantic category data that correspond to the grid point. Then the output height value is supervised based on the three-dimensional point cloud data, and the semantic category data is supervised based on the semantic identification result of the image data. The foregoing steps are cyclically performed until convergence. If convergence does not occur, a plurality of grid points are reselected from the sub-area, and training is repeatedly performed.

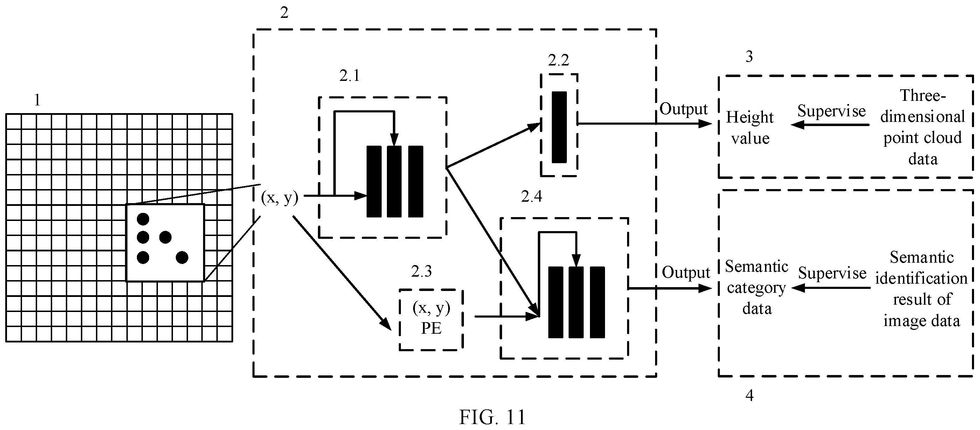

Specifically, as shown in FIG. 11, step 904 specifically includes the following steps:
1. As shown in FIG. 11, a plurality of grid points are first selected from a grid of an iteration area at a bird's eye view. A large box corresponding to 1 in FIG. 11 is a sub-area, and a small box is an iteration area. First coordinate values and second coordinate values of the plurality of grid points are normalized, and are input into a three-dimensional modeling model. The three-dimensional modeling model herein may be a multilayer perceptron (multilayer perceptron, MLP) network. A grid size and a quantity of selected grid points in FIG. 11 do not mean an actual size and an actual quantity, and are merely examples. In FIG. 11, (x, y) is a first coordinate value and a second coordinate value of each grid point that are input.

The first coordinate value and the second coordinate value may be coordinate values of two coordinates in a horizontal direction, for example, may be an x-coordinate value and a y-coordinate value. Generally, for a three-dimensional world, a grid point in a horizontal direction usually corresponds to a unique height value, and training efficiency can be improved by using two coordinate values in the horizontal direction as input.

2. The output height value (the third coordinate value) and the output semantic category data are obtained by using the MLP network.

The following describes, by using a specific MLP example, a process of outputting the height value and the semantic category data. It should be noted that the following example does not mean limitation on this application.

As shown in FIG. 11, the MLP network in this embodiment is a multi-head MLP structure, where input is a normalized valid grid point position, and output is a height and a semantic category of a corresponding grid point. 2.1 is an MLP structure including eight layers in total. A first layer upgrades a 2-dimensional position feature to a 256-dimensional feature, and maps an original 2-dimensional position to a higher dimension by using a high-frequency function, so that the feature carries more high-frequency information. Therefore, it can be ensured that the model can have more accurate output based on the high-frequency information. Following seven layers are fully connected, and a quantity of dimensions of the 256-dimensional feature remains unchanged. In addition, after each layer is connected to a rectified linear unit (rectified linear unit, relu) layer after fully connection, and a skip connection structure is designed. Specifically, the input feature is directly spliced with output of a fourth fully-connected layer and then used as input of a fifth fully-connected layer. It should be further noted that a quantity of layers shown in FIG. 11 is merely an example, and does not indicate an actual quantity of layers.

2.2 in FIG. 11 is a fully-connected layer, and feature dimensions are reduced from 256 to 1, to obtain an estimated height of a specific grid point. Based on the normalized grid point position, 2.3 in FIG. 11 performs positional encoding (positional encoding, PE) by using sin and cos functions, to improve the 2-dimensional feature to a 42-dimensional feature. 2.4 in FIG. 11 is an MLP structure, and includes 17 layers in total. A first layer converts, into a 256-dimensional feature, a 298-dimensional feature obtained by splicing a 256-dimensional feature obtained by a position feature extractor and the 42-dimensional feature obtained through positional encoding. Following 15 layers are fully connected, and a quantity of dimensions of the 256-dimensional feature remains unchanged. Finally, the last fully-connected layer converts the 256-dimensional feature to a semantic category dimension. In addition, after fully connection of these layers, a relu layer is connected, and a skip connection structure is designed. Specifically, the input feature is directly spliced with output of a fourth fully-connected layer as input of a fifth fully-connected layer; the output of the fourth layer and output of an eighth layer are spliced as input of a ninth layer; and the output of the eighth layer and output of a twelfth layer are spliced as input of a thirteenth layer. In this way, specific semantic category data is obtained.
3. The height value of the grid point is supervised. When the grid point has corresponding three-dimensional point cloud data, with reference to pose data, the three-dimensional point cloud data is projected into a coordinate system corresponding to the grid point, to determine the height truth value corresponding to the grid point. A regressed height of the grid point is supervised by using a mean squared error (mean squared error, MSE) MSE loss function.
4. Semantic category data supervision: The grid point is projected into image data based on the first coordinate value and the second coordinate value of the grid point and the height value output by the MLP network, and a truth value of a semantic identification result corresponding to the grid point is determined based on a semantic identification result of the image data. The semantic identification result is supervised by using a cross entropy (cross entropy, CE) loss function.

In addition, when a density of the three-dimensional point cloud data is less than a preset threshold, the selected grid point may not have the corresponding height truth value. In this case, supervision may be performed only based on a semantic category truth value. Because the height value output by the MLP network is also used in a semantic category supervision process, by using the CE function, the semantic identification result can be supervised, and the height value can also be supervised to some extent, so that the model can be more accurately trained.

After the three-dimensional modeling model of the reconstruction area is obtained by using the foregoing steps, each grid point of the reconstruction area may be used as input to be input into the three-dimensional modeling model of the reconstruction area in step 904, to obtain the height value and the semantic category data that correspond to each grid point of the reconstruction area. Three-dimensional space information corresponding to a plurality of reconstruction areas is combined, to generate the second three-dimensional space information.

The foregoing mainly describes the solutions provided in embodiments of this application from a perspective of specific function implementation. It may be understood that, to achieve the foregoing functions, the server or the collection device includes a corresponding hardware structure and/or software module for implementing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the server or the collection device may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used.

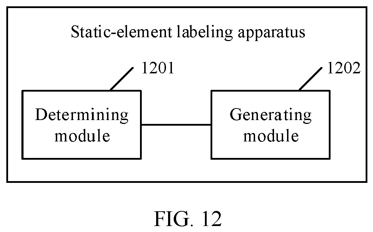

When each functional module is obtained through division for each corresponding function, as shown in FIG. 12, this application further provides a static-element labeling apparatus. The apparatus includes:
a determining module 1201, configured to determine, based on three-dimensional point cloud data that is collected from a target area by a collection device for a plurality of times, a pose of the collection device during collection of each frame of three-dimensional point cloud data in the three-dimensional point cloud data; and
a generating module 1202, configured to generate a static-element labeling result of the target area based on at least the pose and image data that is collected from the target area by the collection device for a plurality of times, where the static-element labeling result indicates road geometry of the target area and a position and a type of a static element.

In an optional implementation, a density of the three-dimensional point cloud data is less than a preset threshold.

In an optional implementation, the generating module 1202 is further configured to generate first three-dimensional space information of the target area based on at least the three-dimensional point cloud data, where the first three-dimensional space information includes semantic category data. When generating the static-element labeling result, the generating module 1202 is specifically configured to: generate second three-dimensional space information of the target area based on the pose, the image data, and the three-dimensional point cloud data, where the second three-dimensional space information includes semantic category data; and fuse the first three-dimensional space information and the second three-dimensional space information to generate target three-dimensional space information, where the target three-dimensional space information is used for generating the static-element labeling result.

In an optional implementation, the generating module 1202 is specifically configured to generate second three-dimensional space information of the target area based on the pose, the image data, and the three-dimensional point cloud data, where the second three-dimensional space information is used for generating the static-element labeling result.

In an optional implementation, the apparatus further includes: an obtaining module 1203 (not shown in the figure), configured to preprocess the image data to obtain a semantic identification result of the image data, where the semantic identification result indicates a type of a static element included in the image data.

In an optional implementation, when generating the second three-dimensional space information, the generating module 1202 is specifically configured to: divide the target area into a plurality of sub-areas, and divide each of the plurality of sub-areas into a plurality of grid points; generate three-dimensional space information of the target area based on a three-dimensional modeling model of each of the plurality of sub-areas; and use the three-dimensional space information of the target area as the second three-dimensional space information. The three-dimensional modeling model uses a first coordinate value and a second coordinate value of a grid point included in the sub-area as input, and uses a third coordinate value and semantic category data of the grid point as output. The output of the three-dimensional modeling model is supervised based on the three-dimensional point cloud data and the semantic identification result of the image data, to train the three-dimensional modeling model.

In an optional implementation, the determining module 1201 is further configured to: determine, based on the pose, a plurality of paths of collecting data by the collection device; for each of the plurality of sub-areas, use an area in a preset range of each of the plurality of paths in the sub-area as a reconstruction area corresponding to the sub-area; and train the three-dimensional modeling model of each of the plurality of sub-areas based on the reconstruction area corresponding to the sub-area.

In an optional implementation, when the three-dimensional modeling model of the sub-area is trained, the three-dimensional modeling model is iteratively trained based on a plurality of iteration areas selected from the reconstruction area.

In an optional implementation, when generating the first three-dimensional space information, the generating module 1202 is specifically configured to generate the first three-dimensional space information based on the three-dimensional point cloud data and the semantic identification result of the image data.

In an optional implementation, when generating the target three-dimensional space information, the generating module 1202 is specifically configured to: convert the first three-dimensional space information and the second three-dimensional space information respectively into bird's eye view images; perform matching and alignment on the bird's eye view images respectively corresponding to the first three-dimensional space information and the second three-dimensional space information; and superpose the first three-dimensional space information and the second three-dimensional space information based on an alignment result, to obtain the target three-dimensional space information.

In an optional implementation, the generating module 1202 is further configured to generate training data of the target area based on the static-element labeling result, where the training data is a bird's eye view image including semantic category data, and the training data is used for training an artificial intelligence model for identifying a static element at a road surface.

In an optional implementation, the generating module 1202 is further configured to generate a high-definition map of the target area based on the static-element labeling result, where the target area includes a road surface area.

It should be noted that all related content of the steps in the foregoing method embodiments may be cited in function description of corresponding functional modules. Details are not described herein again.

The foregoing descriptions about implementations allow a person skilled in the art to understand that, for the purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, division into the modules is merely logical function division and may be other division in actual implementation. For example, a plurality of modules may be combined or integrated into another apparatus, or some features may be ignored or not performed.

This application further provides an electronic device, including a memory and a processor. The memory is configured to store a computer program, and the processor is configured to execute the computer program to implement the foregoing method. The electronic device may be the server 12 shown in FIG. 1 in this application. In addition, the electronic device may alternatively be the collection device 11 shown in FIG. 1. A specific form of the electronic device is not limited in this application, and any device that can perform the foregoing static-element labeling method in this application may be used as the electronic device in this application.

This application further provides a computer-readable storage medium. The computer-readable storage medium stores a computer program. When the computer program is executed by at least one processor, the computer is enabled to implement the foregoing method.

This application further provides a computer program product, including computer-readable code or a non-volatile computer-readable storage medium carrying computer-readable code. When the computer-readable code is run in an electronic device, a processor in the electronic device performs the foregoing method.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A static-element labeling method, wherein the method comprises:
determining, based on three-dimensional point cloud data that is collected from a target area by a collection device for a plurality of times, a pose of the collection device during collection of each frame of three-dimensional point cloud data in the three-dimensional point cloud data; and
generating a static-element labeling result of the target area based on at least the pose and image data that is collected from the target area by the collection device for a plurality of times, wherein the static-element labeling result indicates road geometry of the target area and a position and a type of a static element.

2. The method according to claim 1, wherein a density of the three-dimensional point cloud data is less than a preset threshold.

3. The method according to claim 1 or 2, wherein the method further comprises:
generating first three-dimensional space information of the target area based on at least the three-dimensional point cloud data, wherein the first three-dimensional space information comprises semantic category data; and
generating the static-element labeling result of the target area based on at least the pose and the image data that is collected from the target area by the collection device comprises:
generating second three-dimensional space information of the target area based on the pose, the image data, and the three-dimensional point cloud data, wherein the second three-dimensional space information comprises semantic category data; and
fusing the first three-dimensional space information and the second three-dimensional space information to generate target three-dimensional space information, wherein the target three-dimensional space information is used for generating the static-element labeling result.

4. The method according to claim 1 or 2, wherein generating the static-element labeling result of the target area based on at least the pose and the image data that is collected from the target area by the collection device comprises:
generating second three-dimensional space information of the target area based on the pose, the image data, and the three-dimensional point cloud data, wherein the second three-dimensional space information is used for generating the static-element labeling result.

5. The method according to claim 3 or 4, wherein the method further comprises:
preprocessing the image data to obtain a semantic identification result of the image data, wherein the semantic identification result indicates a type of a static element comprised in the image data.

6. The method according to claim 5, wherein generating the second three-dimensional space information of the target area based on the pose, the image data, and the three-dimensional point cloud data comprises:
dividing the target area into a plurality of sub-areas, and dividing each of the plurality of sub-areas into a plurality of grid points; and
generating the second three-dimensional space information of the target area based on a three-dimensional modeling model of each of the plurality of sub-areas, wherein
the three-dimensional modeling model uses a first coordinate value and a second coordinate value of a grid point comprised in the sub-area as input, and uses a third coordinate value and semantic category data of the grid point as output, and the output of the three-dimensional modeling model is supervised based on the three-dimensional point cloud data and the semantic identification result of the image data, to train the three-dimensional modeling model.

7. The method according to claim 6, wherein the method further comprises:
determining, based on the pose, a plurality of paths of collecting data by the collection device;
for each of the plurality of sub-areas, using an area in a preset range of each of the plurality of paths in the sub-area as a reconstruction area corresponding to the sub-area; and
training the three-dimensional modeling model of each of the plurality of sub-areas based on the reconstruction area corresponding to the sub-area.

8. The method according to claim 7, wherein when the three-dimensional modeling model of the sub-area is trained, the three-dimensional modeling model is iteratively trained based on a plurality of iteration areas selected from the reconstruction area.

9. The method according to claim 5, wherein generating the first three-dimensional space information of the target area based on at least the three-dimensional point cloud data comprises:
generating the first three-dimensional space information based on the three-dimensional point cloud data and the semantic identification result of the image data.

10. The method according to claim 3, wherein fusing the first three-dimensional space information and the second three-dimensional space information to generate the target three-dimensional space information comprises:
converting the first three-dimensional space information and the second three-dimensional space information respectively into bird's eye view images;
performing matching and alignment on the bird's eye view images respectively corresponding to the first three-dimensional space information and the second three-dimensional space information; and
superposing the first three-dimensional space information and the second three-dimensional space information based on an alignment result, to obtain the target three-dimensional space information.

11. The method according to any one of claims 1 to 10, wherein the method further comprises:
generating training data of the target area based on the static-element labeling result, wherein the training data is a bird's eye view image comprising semantic category data, and the training data is used for training an artificial intelligence model for identifying a static element at a road surface.

12. The method according to any one of claims 1 to 10, wherein the method further comprises:
generating a high-definition map of the target area based on the static-element labeling result, wherein the target area comprises a road surface area.

13. A static-element labeling apparatus, wherein the apparatus comprises:
a determining module, configured to determine, based on three-dimensional point cloud data that is collected from a target area by a collection device for a plurality of times, a pose of the collection device during collection of each frame of three-dimensional point cloud data in the three-dimensional point cloud data; and
a generating module, configured to generate a static-element labeling result of the target area based on at least the pose and image data that is collected from the target area by the collection device for a plurality of times, wherein the static-element labeling result indicates road geometry of the target area and a position and a type of a static element.

14. An electronic device, wherein the electronic device comprises a memory and a processor, the memory is configured to store a computer program, and the processor is configured to execute the computer program to implement the static-element labeling method according to any one of claims 1 to 12.

15. A computer-readable storage medium, wherein the computer-readable storage medium stores a computer program, and when the computer program is executed by at least one processor, a computer is enabled to implement the static-element labeling method according to any one of claims 1 to 12.
